# FASCICULE DE BREVET EUROPEEN

(11) **EP 4 078 743 B1**
(45) Date de publication et mention de la délivrance du brevet: **23.09.2026**
(21) Numéro de dépôt: 20821033.6
(22) Date de dépôt: 14.12.2020
(51) Int. Cl.: H02K 15/33, H02G 1/12

(54) **CONDUCTEUR ÉLECTRIQUE POUR UNE PIÈCE BOBINÉE DE MACHINE ÉLECTRIQUE TOURNANTE**
ELEKTRISCHER LEITER FÜR EINE GEWICKELTE KOMPONENTE EINER ROTIERENDEN ELEKTRISCHEN MASCHINE
ELECTRICAL CONDUCTOR FOR A ROTATING ELECTRICAL MACHINE WOUND COMPONENT

(30) Priorité: 20.12.2019 FR 1915180
(43) Date de publication de la demande: 26.10.2022
(73) Titulaire: Valeo Electrification, 95800 Cergy (FR)
(72) Inventeur: DUQUESNE, Jean, 62630 Etaples-sur-Mer (FR); RAMET, Vincent, 62630 Etaples-sur-Mer (FR); DE-CLERCQ, Stéphane, 62630 Etaples-sur-Mer (FR); TELES DE MENEZES, Humberto, 62630 Etaples-sur-Mer (FR); BODIN, Denis, 62630 Etaples-sur-Mer (FR); SCHAYES, Claire, 62630 Etaples-sur-Mer (FR)
(74) Mandataire: Valeo Powertrain Systems
(86) Numéro de dépôt international: PCT/EP2020/086051
(87) Numéro de publication internationale: WO 2021/122488

(56) Documents cités:
- EP-A1- 2 660 956
- WO-A1-02/069472
- WO-A1-2007/125677
- FR-A1- 3 081 631
- US-A1- 2017 346 358

## Description

L'invention concerne notamment un conducteur électrique pour une pièce bobinée de machine électrique tournante.

L'invention trouve une application particulièrement avantageuse dans le domaine des machines électriques tournantes telles que les alternateurs, les alterno-démarreurs ou encore les machines réversibles ou les moteurs électriques. On rappelle qu'une machine réversible est une machine électrique tournante apte à travailler de manière réversible, d'une part, comme générateur électrique en fonction alternateur et, d'autre part, comme moteur électrique par exemple pour démarrer le moteur thermique du véhicule automobile.

Une machine électrique tournante comprend un rotor mobile en rotation autour d'un axe et un stator fixe. En mode alternateur, lorsque le rotor est en rotation, il induit un champ magnétique au stator qui le transforme en courant électrique afin d'alimenter les consommateurs électriques du véhicule et de recharger la batterie. En mode moteur, le stator est alimenté électriquement et induit un champ magnétique entraînant le rotor en rotation par exemple pour démarrer le moteur thermique.

Le stator comprend un corps présentant une culasse formant une pièce de révolution autour d'un axe passant par le centre du stator. Le corps comporte des dents s'étendant radialement à partir de la culasse vers le centre du stator et autour desquelles est disposé un bobinage électrique. Plus particulièrement, les dents délimitent entre elles des encoches dans lesquelles passent des conducteurs électriques participant à former le bobinage du stator.

Le bobinage est formé d'une pluralité de conducteurs électriques également appelés épingles conductrices, logés partiellement dans les encoches du corps et raccordées électriquement deux à deux via leurs extrémités pour former un chemin électrique continu générant des champs magnétiques le long des dents du corps lorsqu'ils sont parcourus par un courant électrique. Autrement dit, les conducteurs électriques sont reliés deux à deux de sorte à former différents ensembles, chaque ensemble pouvant notamment correspondre à une phase d'alimentation électrique.

Afin de relier les conducteurs électriques deux à deux, il est courant d'utiliser une méthode de soudage et notamment par soudage laser. Cette étape de soudage laser ne peut se faire que si les conducteurs électriques sont préalablement dénudés. En effet, chaque conducteur électrique comporte un corps formé d'un matériau électriquement conducteur qui est recouvert d'une couche de revêtement isolante électriquement également appelé émail. Cette couche de revêtement doit être retirée localement avant de réaliser l'étape de soudure laser.

Il existe plusieurs méthodes pour enlever la couche de revêtement. Il est par exemple possible d'utiliser une méthode d'enlèvement mécanique telle que le passage d'une lame ou d'un moyen abrasif. Ces méthodes mécaniques présentent un temps de cycle long et génèrent de la poussière et/ou des résidus important de matériau isolant qui peuvent causer des problèmes lors du fonctionnement de la machine et peuvent ne pas convenir pour des faibles sections de conducteur. Le document WO 2007/125677 concerne un conducteur similaire.

La présente invention vise à permettre d'éviter les inconvénients de l'art antérieur en proposant une méthode de dénudage des conducteurs électriques qui soit pas chère, adaptée à un procédé présentant un temps de cycle restreint tout en limitant les risques de brulure de la couche de revêtement isolante restante ou les risques de défaut de soudure des conducteurs entre eux et ne génère pas de grande quantité de poussière et/ou de résidu.

A cet effet, la présente invention a donc pour objet un conducteur électrique pour une pièce bobinée de machine électrique tournante comportant un corps formé d'un matériau électriquement conducteur et une couche de revêtement formée d'un matériau isolant électriquement, ladite couche de revêtement recouvrant partiellement le corps. Selon la présente invention, le conducteur est formé : d'une première portion, dite portion principale, dans laquelle le corps est recouvert de la couche de revêtement, d'une deuxième portion, dite portion intermédiaire, dans laquelle le corps est recouvert de résidu de la couche de revêtement, et d'une troisième portion, dite portion dénudée, dans laquelle le corps est nu, la portion intermédiaire étant agencée entre la portion principale et la portion dénudée. On entend par nu, le fait que le corps soit dépourvu totalement de couche de revêtement.

Le fait d'avoir une portion intermédiaire agencée entre la portion principale et la portion dénudée permet de créer un éloignement entre lesdites zones et en particulier entre la couche de revêtement et l'endroit où la soudure va être faite. Cela permet de ne pas dégrader la couche de revêtement de la portion principale et ainsi de ne pas générer de risque de court-circuit électrique.

Le fait d'avoir une portion intermédiaire du conducteur pas complètement dénudée voisine de la portion dénudée qui sera par la suite soudée, ne gêne pas l'étape suivante de soudure laser qui est faite uniquement sur la portion dénudée. La portion intermédiaire ne diminue donc pas l'efficacité du procédé de soudure. De plus, le fait de ne pas dénuder totalement toute la surface de l'extrémité du conducteur électrique permet d'optimiser le temps de cycle du procédé de dénudage et le fait d'utiliser une méthode de dénudage laser permet de limiter les émissions de poussière qui pourrait endommager le fonctionnement de la machine et perturber l'étape de soudage.

Selon une réalisation, la portion dénudée s'étend uniquement sur une partie du pourtour dudit conducteur. Cela permet également d'optimiser le temps de cycle du procédé de dénudage en ne prévoyant un dénudage total que de la partie réellement utile à la soudure.

Selon une réalisation, la portion dénudée est plus petite que la portion intermédiaire. Cela permet d'optimiser la distance entre la portion dénudée sur laquelle le laser de soudage va pointer de la portion principale comprenant la couche de revêtement.

Selon une réalisation, la portion intermédiaire s'étend sur une hauteur axiale d'au moins 1 mm.

Selon une réalisation, le conducteur présente une partie centrale formée de la portion principale et deux extrémités, chacune desdites extrémités comporte une portion intermédiaire et une portion dénudée.

Selon une réalisation, le corps du conducteur électrique est formé de cuivre.

Selon une réalisation, la couche de revêtement est formée d'une matière organique.

Selon une réalisation, le conducteur présente une section rectangulaire. Dans cette réalisation, la portion dénudée s'étend uniquement sur au moins une partie de trois faces latérales du conducteur. Autrement dit, une des faces latérales du conducteur est dépourvu de portion dénudée.

Selon une réalisation, la portion dénudée forme une extrémité latérale d'une partie du conducteur.

Selon une réalisation, la portion dénudée présente une forme de portion de cylindre. Cette forme permet de minimiser au maximum la zone de dénudage et donc d'optimiser le temps de cycle du procédé tout en supprimant la couche de revêtement.

Selon une réalisation, la surface d'extrémité axiale du conducteur est formée du corps nu.

La présente invention a également pour objet une pièce bobinée pour une machine électrique tournante comportant un corps formant des encoches et une pluralité de conducteurs électriques, tels que précédemment décrits, logés dans lesdites encoches. La pièce bobinée peut, avantageusement, former un stator ou un rotor de machine électrique tournante.

La présente invention a également pour objet une machine électrique tournante comportant une pièce bobinée telle que précédemment décrite. La machine électrique tournante peut, avantageusement, former un alternateur, un alterno-démarreur, une machine réversible ou un moteur électrique.

La présente invention a également pour objet un procédé de dénudage d'au moins un conducteur électrique tel que précédemment décrit, comportant : une première étape de dénudage de la portion intermédiaire et de la portion dénudée, ladite étape se faisant avec un premier faisceau laser présentant une première longueur d'onde, et une deuxième étape de dénudage de la portion dénudée uniquement, ladite étape se faisant avec un deuxième faisceau laser présentant une deuxième longueur d'onde différente de ladite première longueur d'onde.

Un tel procédé permet d'optimiser le temps de cycle du dénudage du conducteur tout en limitant les émissions de poussière qui pourrait endommager le fonctionnement de la machine et perturber l'étape de soudage.

Selon une réalisation, la première longueur d'onde est supérieure à la deuxième longueur d'onde.

Selon une réalisation, la première étape de dénudage est effectuée à l'aide d'un laser à infrarouge tel qu'un laser à dioxyde de carbone ou à argon.

Selon une réalisation, la deuxième étape de dénudage est effectuée à l'aide d'un laser de type YAG (Grenat d'Yttrium-Aluminium).

Selon une réalisation, le conducteur présente une section rectangulaire et une face dudit conducteur est agencée de manière à former un angle compris entre 20° et 70° par rapport à une tête laser émettant le premier faisceau laser ou le deuxième faisceau laser. Cela permet au faisceau laser émit par ladite tête laser de pouvoir atteindre au moins deux faces du conducteur. Ainsi, lors de la même étape de dénudage, plusieurs faces du conducteur peuvent être dénudées sans mouvement du conducteur ou de la tête laser.

Selon une réalisation, le procédé comporte, en outre, une étape d'orientation du premier faisceau laser ou du deuxième faisceau laser, ladite étape étant réalisée au moyen d'un dispositif d'orientation de sorte à orienter le faisceau laser correspondant sur la portion associée du conducteur.

Selon une réalisation, la tête laser est équipée d'un dispositif d'orientation du faisceau laser de sorte à ce que le faisceau laser balaye au moins deux faces du conducteur lors de la même étape de dénudage. Dans cette réalisation, la tête laser reste immobile pendant le balayage.

Selon une réalisation, le dispositif d'orientation est agencé pour orienter le faisceau laser correspondant sur les portions correspondantes de plusieurs conducteurs électriques les uns à la suite des autres.

Selon une réalisation, le dispositif d'orientation comporte au moins un miroir permettant l'orientation du faisceau laser.

Selon une réalisation, le dispositif d'orientation comporte, en outre, au moins un télescope permettant de modifier la distance focale du faisceau laser. Cela permet de dénuder plusieurs conducteurs agencés à différentes distances de la tête laser.

Selon une réalisation, le premier faisceau laser est émis par une première tête laser et le deuxième faisceau laser est émis par une deuxième tête laser. Cela permet également d'optimiser le temps de cycle du dénudage du conducteur en évitant de devoir changer les paramètres de la tête laser pour effectuer les deux étapes de dénudage.

Selon une réalisation, le dispositif d'orientation est agencé entre la tête laser et le conducteur à dénuder.

La présente invention pourra être mieux comprise à la lecture de la description détaillée qui va suivre, d'exemples de mise en œuvre non limitatifs de l'invention et de l'examen des dessins annexés.

La Figure 1 représente, schématiquement et partiellement, une vue en coupe d'une machine électrique tournante selon un exemple de mise en œuvre de l'invention.

La Figure 2 représente, schématiquement et partiellement, une vue en perspective d'un stator selon l'exemple de la figure 1.

La Figure 3 représente, schématiquement et partiellement, une vue en perspective d'un exemple de conducteur électrique selon l'invention.

La Figure 4 représente, schématiquement et partiellement, une vue latérale de deux extrémités de conducteurs électriques différents soudées entre elles.

La Figure 5 représente, schématiquement et partiellement, une vue latérale d'une partie du conducteur électrique de la figure 4.

La Figure 6 représente, schématiquement et partiellement, une vue en perspective d'un exemple d'outillage du procédé de dénudage.

Les éléments identiques, similaires ou analogues conservent les mêmes références d'une figure à l'autre. On notera également que les différentes figures ne sont pas nécessairement à la même échelle. De plus, les exemples de réalisation qui sont décrits dans la suite ne sont nullement limitatifs. On pourra notamment imaginer des variantes de l'invention ne comprenant qu'une sélection de caractéristiques décrites par la suite isolées des autres caractéristiques décrites.

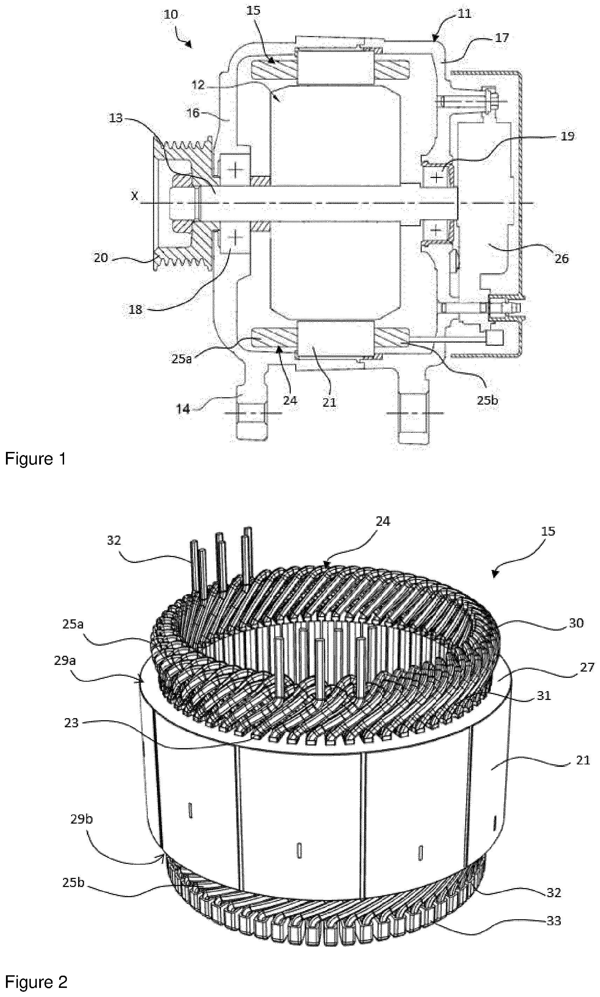

La figure 1 représente un exemple de machine électrique tournante 10 compacte et polyphasée, notamment pour véhicule automobile. Cette machine 10 transforme de l'énergie mécanique en énergie électrique, en mode alternateur, et peut fonctionner en mode moteur pour transformer de l'énergie électrique en énergie mécanique. Cette machine électrique tournante 10 est, par exemple, un alternateur, un alterno-démarreur, une machine réversible ou un moteur électrique.

Dans cet exemple, la machine 10 comporte un boitier 11. A l'intérieur de ce boitier 11, elle comporte, en outre, un arbre 13, un rotor 12 solidaire en rotation de l'arbre 13 et un stator 15 entourant le rotor 12. Le mouvement de rotation du rotor 12 se fait autour d'un axe X. Dans la suite de la description, la direction axiale correspond à l'axe X, traversant en son centre l'arbre 13, alors que les orientations radiales correspondent à des plans concourants, et notamment perpendiculaires, à l'axe X. Pour les directions radiales, la dénomination interne correspondant à un élément orienté vers l'axe, ou plus proche de l'axe par rapport à un second élément, la dénomination externe désignant un éloignement de l'axe.

Dans cet exemple, le boitier 11 comporte un flasque avant 16 et un flasque arrière 17 qui sont assemblés ensemble. Ces flasques 16, 17 sont de forme creuse et portent, chacun, centralement un palier accouplé à un roulement à billes 18, 19 respectif pour le montage à rotation de l'arbre 13. En outre, le boitier 11 comporte des moyens de fixation 14 permettant le montage de la machine électrique tournante 10 dans le véhicule.

Un organe d'entraînement 20 tel qu'une poulie ou un pignon peut être fixé sur une extrémité avant de l'arbre 13. Cet organe permet de transmettre le mouvement de rotation à l'arbre ou à l'arbre de transmettre son mouvement de rotation. Dans la suite de la description, les dénominations avant/arrière se réfèrent à cet organe. Ainsi une face avant est une face orientée en direction de l'organe alors qu'une face arrière est une face orientée en direction opposée dudit organe.

Le flasque avant 16 et le flasque arrière 17 sont ici agencés de manière à former une chambre pour la circulation d'un liquide de refroidissement tel que de l'eau ou de l'huile. Alternativement, les flasques pourraient comporter des ouvertures pour le passage d'un flux d'air de refroidissement engendré par la rotation d'au moins un ventilateur solidaire en rotation avec le rotor ou l'arbre.

Dans cet exemple, le rotor 12 est formé d'un paquet de tôles logeant des aimants permanents formant les pôles magnétiques. Alternativement, le rotor pourrait être un rotor à griffe comportant deux roues polaires et une bobine rotorique.

Dans cet exemple de réalisation, le stator 15, illustré plus précisément sur la figure 2, comporte un corps de stator 21 formé d'un paquet de tôles doté d'encoches 22, équipées d'isolant d'encoche 23 pour le montage d'un bobinage électrique 24. Le bobinage traverse les encoches du corps 21 et forment un chignon avant 25a et un chignon arrière 25b de part et d'autre du corps du stator. Par ailleurs, le bobinage 24 est formé d'une ou plusieurs phases comportant au moins un conducteur électrique 30 et étant reliées électriquement à un ensemble électronique 26.

L'ensemble électronique 26 qui est ici monté sur le boitier 11, comporte au moins un module électronique de puissance permettant de piloter au moins une phase du bobinage 24. Le module de puissance forme un pont redresseur de tension et un onduleur pour transformer la tension alternative générée en une tension continue et inversement. Alternativement, l'ensemble électronique pourrait être déporté de la machine.

Le corps du stator 21 est formé d'une culasse 27 de forme annulaire autour de l'axe X et d'une pluralité de dents 28 s'étendant radialement en direction du centre du stator à partir de la culasse, et en particulier ici à partir d'une face latérale formant une paroi interne de la culasse 27. Les dents 28 sont réparties angulairement régulièrement sur le pourtour du corps annulaire, avec des espaces successifs ménagés entre elles de manière à définir les encoches 22 s'étendant en série sur le pourtour du corps annulaire du stator, chaque encoche étant délimitée par deux dents successives. Selon le présent exemple, les dents délimitent 48 encoches réparties le long de la circonférence du corps de stator, ces encoches étant agencées pour former un support au bobinage électrique 24. En variante, un nombre différent d'encoches peut être utilisé tel que 96, 84, 72, 60. Il est entendu que ce nombre dépend notamment de l'application de la machine, du diamètre du stator et du nombre de pôles du rotor.

Selon la direction axiale, c'est-à-dire la direction parallèle à l'axe X, les encoches 22 sont ouvertes sur une première face d'extrémité axiale 29a et une seconde face d'extrémité axiale 29b du corps de stator 21. Autrement dit, les encoches traversent axialement de part en part le corps et débouchent sur les deux faces d'extrémité axiales opposées du stator. Par les termes « faces d'extrémité axiales », on entend des faces perpendiculaires ou sensiblement perpendiculaires à l'axe de révolution X du stator.

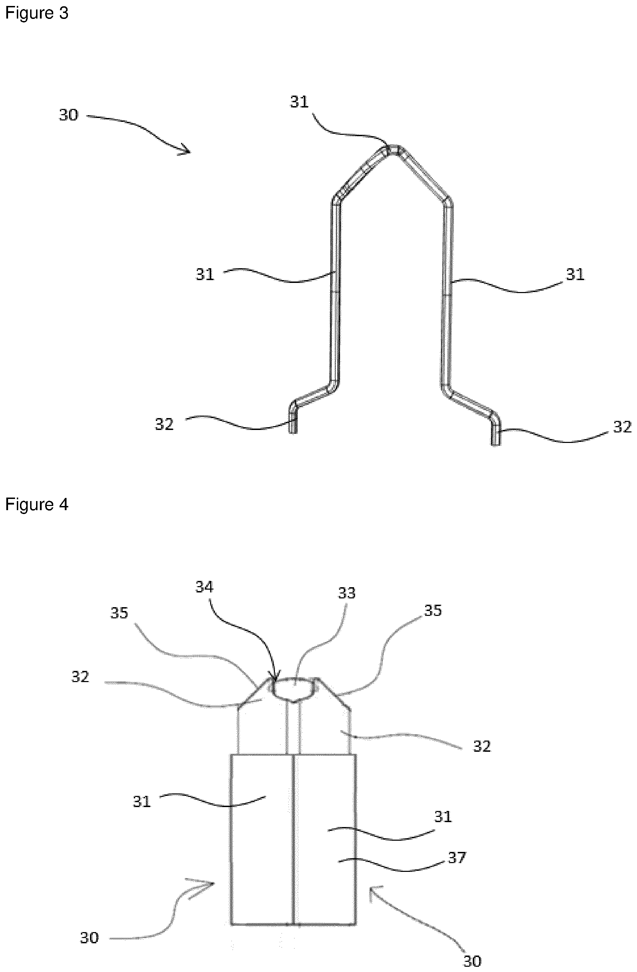

Le bobinage 24 est formé à partir d'une pluralité de conducteurs électriques 30, couramment appelé épingles, reliés électriquement entre eux pour former des chemins électriques formant les phases du bobinage. La figure 3 illustre un exemple de conducteur électrique 30. La description qui suit est faite en référence à un conducteur électrique mais il est entendu que cela s'applique de préférence à tous les conducteurs électrique formant le bobinage 24.

Le conducteur 30 est formé d'une partie centrale 31 et de deux extrémités 32, les extrémités s'étendant de part et d'autre de la partie centrale. La partie centrale peut présenter une forme de I sensiblement droite s'étendant partiellement dans une encoche 22. Alternativement, la partie centrale peut présenter une forme de U présentant deux portions droites s'étendant chacune partiellement dans une encoche 22 respective. Les deux alternatives décrites ci-dessus peuvent être présentent pour différents conducteurs d'une même phase du bobinage 24.

Chaque encoche 22 comporte plusieurs parties centrales 31 alignées radialement et formant différentes couches, les parties centrales d'une même encoche appartenant à des conducteurs électriques 30 différents. Chaque partie centrale 31 fait saillie dans les deux directions axiales opposées de part et d'autre du corps de stator 21. Les extrémités 32 de chacun des conducteurs prolongent, de part et d'autre, la partie centrale du conducteur correspond à l'extérieur du corps 21 du stator. Les extrémités des conducteurs à connecter ensemble sont agencées de manière adjacente l'une de l'autre, par exemple dans une direction radiale.

Comme illustré sur la figure 4, deux extrémités appartenant à des conducteurs différents sont connectées ensembles. Plus précisément, chacune des extrémités 32 d'un conducteur 30 est connectée électriquement à une extrémité respective d'un des autres conducteurs formant la phase. La connexion électrique entre les deux extrémités se fait notamment par soudage. Ainsi, un point de soudure 33 est formé entre les deux extrémités 32. Les points de soudure assurent les liaisons électriques entre les conducteurs électriques 30 pour former le bobinage 24.

Dans l'exemple illustré sur la figure 4, chaque extrémité 32 de conducteur électrique comporte un chanfrein 35 réduisant la section du conducteur. Le point de soudure 33 est formé sur la partie ne comprenant pas de chanfrein de l'extrémité 32. Par exemple, chaque point de soudure pénètre dans une fenêtre 34 de forme globalement rectangulaire, formée lors de l'étape de soudage, s'étendant entre les chanfreins 35 des deux conducteurs 30 à souder.

Le conducteur 30 comporte un corps 36 en matériau électriquement conducteur tel que le cuivre. Le corps 36 est au moins partiellement recouvert d'une couche de revêtement 37 en matériau électriquement isolant tel que de l'émail ou une matière organique isolante électriquement.

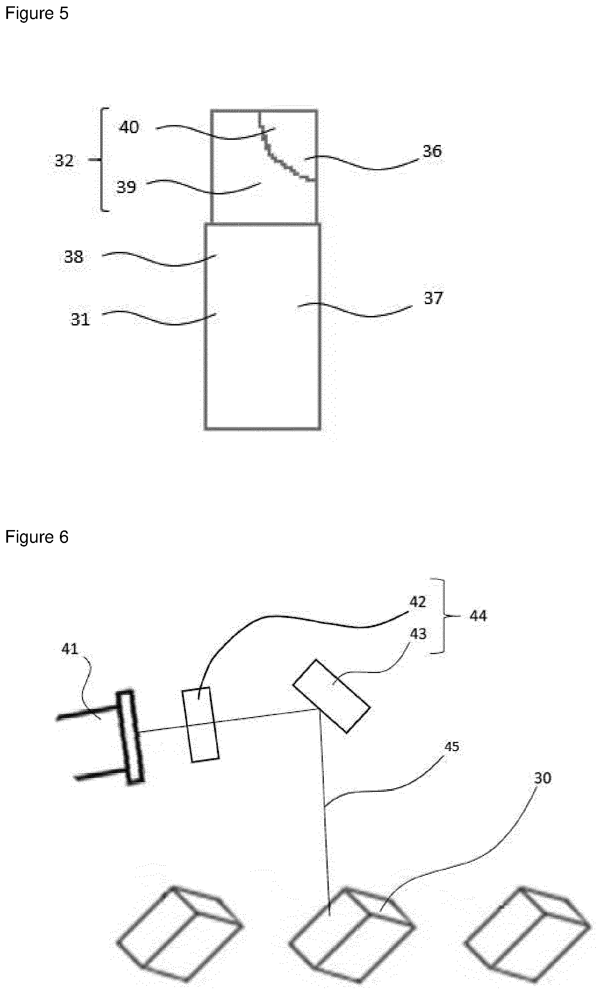

La figure 5 illustre une partie d'un conducteur 30 et plus précisément une partie de la partie centrale 31 ainsi qu'une extrémité 32 prolongeant ladite partie centrale. La partie centrale 31 forme une portion principale 38 du conducteur dans laquelle le corps 36 est recouvert de la couche de revêtement 37. L'extrémité 32 présente une portion intermédiaire 39 dans laquelle le corps 36 est recouvert de résidu de la couche de revêtement 37 et une portion dénudée 40 dans laquelle le corps 36 est nu. Dans la portion dénudée 40, le corps 36 n'est donc pas recouvert par la couche de revêtement 37. Ainsi, une surface externe de la partie principale 38 est isolée électriquement alors qu'une surface externe de la partie dénudée 40 est conductrice électriquement. Les parties principales 38 de plusieurs conducteurs 30 peuvent être en contact les unes des autres et notamment dans les encoches 22 sans créer de court-circuit dans le bobinage 24.

Chaque extrémité 32 s'étend suivant un axe sensiblement parallèle l'axe X de la machine 10. L'aire de la section totale de la portion principale 38 est supérieure à l'aire de la section totale de la portion dénudée 40, lesdites sections étant chacune prise dans un plan radial par rapport à l'axe.

La portion intermédiaire 39 peut être agencée entre la portion principale 38 et la portion dénudée 40. Plus précisément, la portion intermédiaire 39 est, ici, interposée axialement entre la portion principale 38 et la portion dénudée 40.

La portion dénudée 40 peut former une extrémité latérale d'une partie du conducteur 30. De préférence, la portion dénudée 40, et en particulier ladite extrémité latérale, d'un premier conducteur 30 est agencée en vis-à-vis d'une portion dénudée, et en particulier d'une extrémité latérale, d'un second conducteur, les deux conducteurs étant destinés à être soudés l'un avec l'autre.

La portion dénudée 40 présente une surface inférieure à celle de la portion intermédiaire 39.

Dans cet exemple, la portion dénudée 40 s'étend uniquement sur une partie du pourtour de l'extrémité 32 du conducteur. Par exemple, une section, dans un plan radial, du conducteur 30 comprend à la fois une partie correspondant à la portion dénudée 40 et une partie correspondant à la portion intermédiaire 39.

Dans l'exemple des figures 4 et 5, les extrémités 32 sont illustrées avec une vue latérale dans une direction circonférentielle.

Toujours dans cet exemple, le conducteur 30 présente une section, dans un plan radial, de forme globalement rectangulaire. Ainsi, l'épaisseur de la portion dénudée 40, mesurée dans une direction circonférentielle par rapport à l'axe X, est inférieure à l'épaisseur de la portion principale 38, également mesurée dans une direction circonférentielle. De manière similaire, la largeur de la portion dénudée 40, mesurée dans une direction radiale par rapport à l'axe X, est inférieure à la largeur de la portion principale 38, également mesurée dans une direction radiale.

Dans cet exemple, la portion dénudée 40 s'étend sur trois des faces latérales du conducteur 30. Autrement dit, une des faces latérales du conducteur ne présente pas de portion dénudée, c'est-à-dire que ladite face latérale ne présente pas de portion où le corps 36 du conducteur est nu. Par exemple, la portion dénudée 40 présente une forme de portion de cylindre.

On comprendra que la forme et les dimensions de la portion dénudée dépendent de l'application, de la matière du corps 36 et des dimensions du conducteur 30.

On décrit ci-après un exemple de procédé de réalisation d'un conducteur 30 et succinctement d'un bobinage électrique 24.

Postérieurement à l'étape de montage des segments conducteurs 30 dans les encoches 22 du corps de stator 21, on procède à une étape de dénudage des extrémités 32 des conducteurs 30. Alternativement, cette étape de dénudage peut être réalisée après l'insertion des conducteurs 30 dans le corps de stator 21.

Dans l'exemple décrit ici, la première étape consiste à produire une bobine conductrice. La bobine est formée d'un corps réalisé en matériau électriquement conducteur et recouvert d'une couche de revêtement isolante.

Une deuxième étape consiste à couper un conducteur 30 dans la bobine conductrice. La bobine conductrice est formée d'une succession continue de fil conducteur destiné à devenir unitaire une fois coupé. De part cette étape de découpe, les surfaces d'extrémité axiale du conducteur sont formées du corps nu. Les faces latérales du conducteur 30 sont formées de la couche de revêtement.

Avant de pouvoir effectuer l'étape de soudure, il est nécessaire de dénuder les extrémités du conducteur 30, c'est-à-dire de retirer la couche de revêtement électriquement isolante ainsi que les résidus de ladite couche de revêtement. En effet, si l'étape de soudure n'est pas réalisée sur un matériau conducteur nu, cela peut entraîner la création de porosités dans la soudure qui peuvent diminuer la connexion électrique entre les extrémités des conducteurs.

L'étape de dénudage est une étape de dénudage laser. Ladite étape de dénudage sera décrite plus en détail ci-après. L'étape de dénudage est répétée à chacune des extrémités du conducteur 30.

Les conducteurs sont ensuite pliés et/ou insérés dans les encoches 22 du corps de stator 21. Les conducteurs peuvent ensuite être pliés une seconde fois afin de rapprocher deux à deux les extrémités 32 des conducteurs à souder. Enfin, lesdites extrémités adjacentes sont connectées électriquement entre elles afin de réaliser le bobinage électrique 24. Cette connexion électrique entre les extrémités 32 adjacentes est réalisée par soudage laser. Plus précisément, un faisceau laser est émis en direction de la face d'extrémité axiale de la portion dénudée 40. La portion dénudée 40 formée uniquement du corps en matériau conducteur va alors fondre et se mélanger avec la portion dénudée du conducteur adjacent pour former le point de soudure 33.

L'étape de dénudage mentionnée précédemment comporte : une première étape de dénudage de la portion intermédiaire et de la portion dénudée suivie d'une deuxième étape de dénudage de la portion dénudée uniquement.

La première étape de dénudage est réalisée par un premier faisceau laser qui vient enlever, notamment par brulage, une partie de la couche de revêtement 37. La première étape de dénudage retire en grande partie la couche de revêtement 37 tout en laissant une fine couche de résidu de couche de revêtement sur le corps 36. La couche de résidu est principalement formée par de la poussière de couche de revêtement 37. Ainsi, après cette première étape de dénudage, la portion intermédiaire 39 et la portion dénudée présentent le corps 36 recouvert de résidu de couche de revêtement 37.

La première étape de dénudage est, par exemple, effectuée à l'aide d'un laser à infrarouge tel qu'un laser à dioxyde de carbone ou d'un laser à argon. La longueur d'onde du faisceau laser utilisée dans cet exemple est comprise entre 2,7 micromètre et 15 micromètre et est notamment de 4,3 micromètre ou de 9,4 micromètre ou encore de 10,6 micromètre.

La deuxième étape de dénudage est réalisée par un deuxième faisceau laser qui vient enlever et nettoyer la fine couche de résidu de la couche de revêtement 37 sur la portion dénudée 40. Ainsi, la portion dénudée est uniquement formée du corps 36 et ne présente plus de couche de revêtement 37 ou de résidu.

La deuxième étape de dénudage est, par exemple, effectuée à l'aide d'un laser de type YAG (Grenat d'Yttrium-Aluminium). La longueur d'onde du faisceau laser utilisée dans cet exemple est comprise entre 60 nanomètre et 1070 nanomètre et notamment comprise entre 1030 nanomètre et 1060 nanomètre.

On comprendra que les longueurs d'onde des deux faisceaux laser dépendent de l'application, de la matière du corps 36.

Chacun des faisceaux lasers 45 est émis par une tête laser 41 correspondante.

Les étapes de dénudage décrites précédemment peuvent être faite sur une face du conducteur, et en particulier la face du conducteur 30 s'étendant en vis-à-vis de la tête laser 41 émettant le faisceau laser 45 associé.

Alternativement, afin d'améliorer le temps de cycle du procédé de dénudage, le conducteur de section rectangulaire peut être agencé de sorte à ce qu'une face dudit conducteur forme un angle compris entre 20° et 70° par rapport à la tête laser 41 émettant le faisceau laser 45 associé à ladite étape de dénudage en cours. Cet angle est de préférence compris entre 40°et 50° et notamment égal à 45°. La tête laser peut alors être équipée d'un dispositif d'orientation 44 du faisceau laser de sorte à ce que le faisceau laser 45 balaye deux faces du conducteur 30 lors de la même étape de dénudage sans mouvement du conducteur ou de la tête laser.

Le dispositif d'orientation 44 comporte au moins un miroir 43 permettant d'orienter le faisceau laser 45 dans la bonne direction sans bouger la tête laser 41 de sorte à ce que le faisceau laser puisse attendre plusieurs faces du même conducteur 30 et en particulier deux faces latérales adjacentes. Le dispositif d'orientation 44 peut également être agencé, à l'aide du miroir 43, pour orienter le faisceau laser correspondant sur les extrémités 32 de plusieurs conducteurs électriques les uns à la suite des autres. Une des étapes de dénudage peut alors être réalisée sur plusieurs conducteurs 30 sans mouvement des conducteurs ou de la tête laser 41. De préférence, les conducteurs 30 sont ici agencés de manière parallèle les uns des autres.

Le dispositif d'orientation 44 peut également comporte au moins un télescope 42 permettant de faire varier la distance entre la tête laser 41 et le conducteur 30 à dénuder sans que l'un de ces éléments ne bouge. De préférence, le télescope 42 est agencé de manière plus proche de la tête laser 41 que le miroir 43. De préférence, les différents conducteurs sont agencés parallèlement les uns des autres afin de permettre un dénudage desdits conducteurs en limitant le mouvement du dispositif d'orientation 44.

La présente invention trouve des applications en particulier dans le domaine des stators pour alternateur ou machine réversible mais elle pourrait également s'appliquer à tout type de machine tournante. De manière similaire, l'invention pourrait s'appliquer à des rotors de machine électrique tournante.

La présente invention ne se limite pas aux modes de réalisation décrits. Des altérations et/ou des modifications de ces modes de réalisation sont envisagées comme des variantes de l'invention, pour autant qu'elles ne s'écartent pas de son champ d'application, tel que défini par les revendications annexées.

## Revendications

1. Conducteur électrique pour une pièce bobinée de machine électrique tournante comportant un corps (36) formé d'un matériau électriquement conducteur et une couche de revêtement (37) formée d'un matériau isolant électriquement, ladite couche de revêtement recouvrant partiellement le corps ; le conducteur étant **caractérisé en ce qu'**il est formé :
a. d'une première portion, dite portion principale (38), dans laquelle le corps (36) est recouvert de la couche de revêtement (38),
b. d'une deuxième portion, dite portion intermédiaire (39), dans laquelle le corps (36) est recouvert de résidu de la couche de revêtement, et
c. d'une troisième portion, dite portion dénudée (40), dans laquelle le corps (36) est nu, la portion intermédiaire étant agencée entre la portion principale et la portion dénudée.

2. Conducteur électrique selon la revendication précédente, **caractérisé en ce que** la portion dénudée (40) s'étend uniquement sur une partie du pourtour dudit conducteur (30).

3. Conducteur électrique selon l'une des revendications précédentes, **caractérisé en ce que** la portion dénudée (40) est plus petite que la portion intermédiaire (39).

4. Conducteur électrique selon l'une des revendications précédentes, **caractérisé en ce que** la portion dénudée (40) forme une extrémité latérale d'une partie du conducteur (30).

5. Conducteur électrique selon l'une des revendications précédentes, **caractérisé en ce qu'**il présente une section rectangulaire et **en ce que** la portion dénudée (40) s'étend uniquement sur au moins une partie de trois faces latérales du conducteur (30).

6. Pièce bobinée pour une machine électrique tournante comporte un corps (21) formant des encoches (22) et une pluralité de conducteurs électriques (30) selon l'une quelconque des revendications précédentes logés dans lesdites encoches.

7. Machine électrique tournante comprenant une pièce bobinée (15) selon la revendication précédente.

8. Procédé de dénudage d'au moins un conducteur électrique (30) selon l'une quelconque des revendications 1 à 5, comportant :
a. une première étape de dénudage de la portion intermédiaire (39) et de la portion dénudée (40), ladite étape se faisant avec un premier faisceau laser présentant une première longueur d'onde, et
b. une deuxième étape de dénudage de la portion dénudée (40) uniquement, ladite étape se faisant avec un deuxième faisceau laser présentant une deuxième longueur d'onde différente de ladite première longueur d'onde.

9. Procédé de dénudage selon la revendication précédente, **caractérisé en ce que** la première longueur d'onde est supérieure à la deuxième longueur d'onde.

10. Procédé de dénudage selon la revendication 8 ou 9, **caractérisé en ce que** le conducteur (30) présente une section rectangulaire et **en ce qu'**une face dudit conducteur est agencée de manière à former un angle compris entre 20° et 70° par rapport à une tête laser (41) émettant le premier faisceau laser ou le deuxième faisceau laser.

## Patentansprüche

1. Elektrischer Leiter für ein gewickeltes Teil einer rotierenden elektrischen Maschine, der einen Körper (36) aus einem elektrisch leitenden Material und eine Beschichtungsschicht (37) aus einem elektrisch isolierenden Material aufweist, wobei die Beschichtungsschicht den Körper teilweise bedeckt; der Leiter ist **dadurch gekennzeichnet, dass** er gebildet wird aus:
a. einem ersten Abschnitt, dem sogenannten Hauptabschnitt (38), in dem der Körper (36) von der Beschichtungsschicht (38) bedeckt ist,
b. einem zweiten Abschnitt, dem sogenannten Zwischenabschnitt (39), in dem der Körper (36) von Rückständen der Beschichtungsschicht bedeckt ist, und
c. einem dritten Abschnitt, dem sogenannten abisolierten Abschnitt (40), in dem der Körper (36) blank ist, wobei der Zwischenabschnitt zwischen dem Hauptabschnitt und dem abisolierten Abschnitt angeordnet ist.

2. Elektrischer Leiter nach dem vorhergehenden Anspruch, **dadurch gekennzeichnet, dass** sich der abisolierte Abschnitt (40) nur über einen Teil des Umfangs des Leiters (30) erstreckt.

3. Elektrischer Leiter nach einem der vorhergehenden Ansprüche, **dadurch gekennzeichnet, dass** der abisolierte Abschnitt (40) kleiner ist als der Zwischenabschnitt (39).

4. Elektrischer Leiter nach einem der vorhergehenden Ansprüche, **dadurch gekennzeichnet, dass** der abisolierte Abschnitt (40) ein seitliches Ende eines Teils des Leiters (30) bildet.

5. Elektrischer Leiter nach einem der vorhergehenden Ansprüche, **dadurch gekennzeichnet, dass** er einen rechteckigen Querschnitt aufweist und dass sich der abisolierte Abschnitt (40) nur über mindestens einen Teil von drei Seitenflächen des Leiters (30) erstreckt.

6. Gewickeltes Teil für eine rotierende elektrische Maschine, das einen Körper (21) mit Nuten (22) und eine Vielzahl von elektrischen Leitern (30) nach einem der vorhergehenden Ansprüche umfasst, die in den Nuten aufgenommen sind.

7. Rotierende elektrische Maschine mit einem gewickelten Teil (15) nach dem vorhergehenden Anspruch.

8. Verfahren zum Abisolieren mindestens eines elektrischen Leiters (30) nach einem der Ansprüche 1 bis 5, umfassend:
a. einen ersten Abisolierschritt des Zwischenabschnitts (39) und des abisolierten Abschnitts (40), wobei dieser Schritt mit einem ersten Laserstrahl mit einer ersten Wellenlänge durchgeführt wird, und
b. einen zweiten Abisolierschritt ausschließlich des abisolierten Abschnitts (40), wobei dieser Schritt mit einem zweiten Laserstrahl mit einer zweiten Wellenlänge durchgeführt wird, die sich von der ersten Wellenlänge unterscheidet.

9. Abisolierverfahren nach dem vorhergehenden Anspruch, **dadurch gekennzeichnet, dass** die erste Wellenlänge größer ist als die zweite Wellenlänge.

10. Abisolierverfahren nach Anspruch 8 oder 9, **dadurch gekennzeichnet, dass** der Leiter (30) einen rechteckigen Querschnitt aufweist und dass eine Fläche des Leiters so angeordnet ist, dass sie einen Winkel zwischen 20° und 70° gegenüber einem Laserkopf (41) bildet, der den ersten Laserstrahl oder den zweiten Laserstrahl aussendet.

## Claims

1. Electrical conductor for a wound part of a rotating electrical machine comprising a body (36) formed of an electrically conductive material and a coating layer (37) formed of an electrically insulating material, said coating layer partially covering the body; the conductor being **characterized in that** it is formed:
a. of a first portion, called the main portion (38), in which the body (36) is covered by the coating layer (38),
b. of a second portion, called the intermediate portion (39), in which the body (36) is covered by residue of the coating layer, and
c. of a third portion, called the stripped portion (40), in which the body (36) is bare, the intermediate portion being arranged between the main portion and the stripped portion.

2. Electrical conductor according to the preceding claim, **characterized in that** the stripped portion (40) extends only over part of the perimeter of said conductor (30).

3. Electrical conductor according to one of the preceding claims, **characterized in that** the stripped portion (40) is smaller than the intermediate portion (39).

4. Electrical conductor according to one of the preceding claims, **characterized in that** the stripped portion (40) forms a lateral end of a part of the conductor (30).

5. Electrical conductor according to one of the preceding claims, **characterized in that** it has a rectangular cross-section and **in that** the stripped portion (40) extends only over at least a part of three lateral faces of the conductor (30).

6. Wound part for a rotating electrical machine comprising a body (21) forming slots (22) and a plurality of electrical conductors (30) according to any one of the preceding claims housed in said slots.

7. Rotating electrical machine comprising a wound part (15) according to the preceding claim.

8. Method for stripping at least one electrical conductor (30) according to any one of claims 1 to 5, comprising:
a. a first stripping step of the intermediate portion (39) and the stripped portion (40), said step being carried out with a first laser beam having a first wavelength, and
b. a second stripping step of the stripped portion (40) only, said step being carried out with a second laser beam having a second wavelength different from said first wavelength.

9. Stripping method according to the preceding claim, **characterized in that** the first wavelength is greater than the second wavelength.

10. Stripping method according to claim 8 or 9, **characterized in that** the conductor (30) has a rectangular cross-section and **in that** one face of said conductor is arranged so as to form an angle of between 20° and 70° with respect to a laser head (41) emitting the first laser beam or the second laser beam.
